# EUROPEAN PATENT SPECIFICATION

(11) **EP 3 953 612 B1**
(45) Date of publication and mention of the grant of the patent: **27.12.2023**
(21) Application number: 20719735.1
(22) Date of filing: 08.04.2020
(51) Int. Cl.: F16H 37/08, B23Q 1/25, B23Q 1/54

(54) **DRIVE ARRANGEMENT**
ANTRIEBSANORDNUNG
ARRANGEMENT D'ENTRAÎNEMENT

(30) Priority: 12.04.2019 ZA 201902310
(43) Date of publication of application: 16.02.2022
(73) Proprietor: University of Pretoria, 0002 Pretoria (ZA)
(72) Inventor: MARX, Douw, 0001 Pretoria (ZA)
(74) Representative: Dehns
(86) International application number: PCT/IB2020/053364
(87) International publication number: WO 2020/208551

(56) References cited:
- EP-A1- 0 909 909
- GB-A- 1 217 326
- JP-A- S55 126 358
- US-A- 2 610 550
- US-A- 3 456 533
- US-A- 5 429 345

## Description

This invention relates to a method and a drive arrangement for displacing a rotating component.

In the manufacturing industry, it is often required to displace a rotating component, e.g. a tool holder, which is rotatable about an axis of rotation in a plane, which is often perpendicular to the axis of rotation.

GB 1 217 326 A discloses a machine tool device including a housing, a first body mounted on the housing and constrained for rotational movement about a first fixed axis, and a second body carried by the first body and constrained for rotational movement about a second axis which is parallel to but offset from the first axis, and is adapted to carry at a point offset from the second axis a third body to be moved in a direction laterally of the two axes. An example of drive arrangement can be found on EP0909909A1.

In many current systems of which the inventor is aware, the displacement of the rotating component in the plane is achieved by using a plurality of linear actuators serially arranged with one actuator driving another. This arrangement has comparatively low stiffness and dissipates energy through the acceleration the actuator mass in a serial kinematic chain.

It is an object of this invention to provide means which will at least ameliorate the problems associated with the prior art.

According to one aspect of the invention, there is provided a drive arrangement according to claim 1.

The lateral displacement may be in a plane which is perpendicular to the axis of rotation.

The drive arrangement may include at least one planetary gear set comprising a sun gear, an annular ring gear and at least one planet gear which engages with both the ring gear and the sun gear and drive means configured to drive the sun gear and the ring gear independently of one another to rotate the planet gear about the axis of rotation and/or displace it laterally relative to the axis of rotation.

In one embodiment of the invention, the first planetary gear set may include a first sun gear, a first annular ring gear and a first planet gear which engages with both the first ring gear and the first sun gear and the second planetary gear set includes a second sun gear, a second annular ring gear and a second planet gear which engages with both the second ring gear and the second sun gear, the first planet gear being drivingly connected to the second ring gear.

The drive arrangement may include an arbitrary amount of planetary gear sets arranged in series, with the rotational axis of a given planetary gear system's sun and ring gears coinciding with the planet gear rotational axis from the downstream planetary system.

The drive arrangement includes a plurality of gear trains and a power source connected to each gear train. An independent power source is connected to each gear train to permit the gear trains to be driven independently of one another. Each power source provides a rotational input and remains stationary relative to the other power sources. Each power source is an electric motor.

The drive arrangement includes three gear trains with an encoded electric motor being connected to each drive train to permit the gear trains to be driven independently of one another and in so doing, prescribe the angular and planar position of the component.

A first gear train includes a first input gear, to which a first electric motor is drivingly connected, the first input gear being rotatable about a primary axis of rotation, a first output gear which is a ring gear and a first intermediate gear which is connected to the output gear and to which the first input gear is drivingly connected. A second gear train includes a second input gear, to which a second electric motor is drivingly connected, the second input gear being rotatable about the primary axis of rotation, a second output gear and a second intermediate gear pair whereby the second input gear is drivingly connected to the second output gear, the second output gear being in engagement with the first output gear. A third gear train includes a third input gear, to which a third electric motor is drivingly connected, the third input gear being rotatable about the primary axis of rotation, and a third output gear to which the third input gear is drivingly connected, the third output gear being a ring gear which is rotatable about the primary axis of rotation and with which the first intermediate gear of the first gear train is drivingly engaged.

The second intermediate gear pair includes a connecting shaft to which first and second intermediate gears are mounted, the first intermediate gear being in driving engagement with the second input gear and the second intermediate gear being in driving engagement with the second output gear. The first intermediate gear of the first gear train and the connecting shaft of the second gear train being rotatable about a second axis of rotation which is parallel and laterally spaced from the primary axis of rotation. The second output gear of the second gear train will form or be connected to the rotating component.

The first input gear, second input gear and third output gear may be mounted on first, second and third shafts, respectively which are concentrically arranged for rotation about the primary axis of rotation. Drive to the first second and third shafts may be through first, second and third pinions respectively to which the first, second and third electric motors are drivingly connected.

According to another aspect of the invention, there is provided a method of displacing a component according to claim 7.

The power source may be stationary and configured to provide a rotational input.

Both the rotational and lateral displacement of the component are by a drive arrangement which consists of a plurality of rotating components.

The drive arrangement may include a first planetary gear set and a second planetary gear set, the first and second planetary gear sets being arranged in series.

The drive arrangement is a drive arrangement as described above.

The invention will now be described, by way of example, with reference to the accompanying diagrammatic drawings.

In the drawings:
Figure 1 shows a three-dimensional view of a drive arrangement in accordance with the invention;
Figure 2 shows a side view of the drive arrangement of Figure 1;
Figure 3 shows a sectional view of the drive arrangement of Figure 1;
Figure 4 shows a three-dimensional view of a first gear train of the drive arrangement;
Figure 5 shows a three-dimensional view of parts of the first gear train and a second gear train of the drive arrangement;
Figure 6 shows a three-dimensional view of a third gear train of the drive arrangement;
Figure 7 shows three-dimensional views of carrier arms forming part of the drive arrangement; and

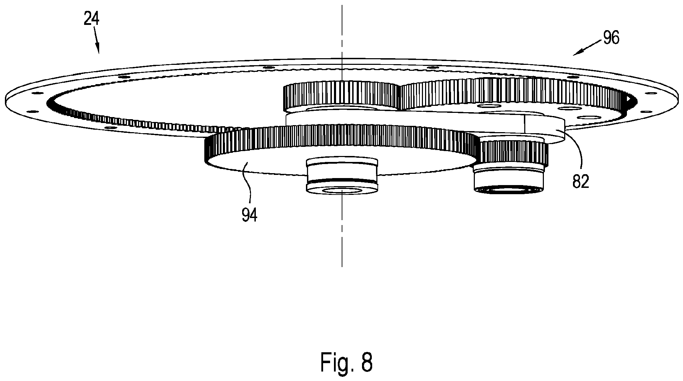

Figure 8 shows a three-dimensional view of one of the carrier arms, in use.

### DETAILED DESCRIPTION OF AN EXAMPLE EMBODIMENT

The following description of the invention is provided as an enabling teaching of the invention. Those skilled in the relevant art will recognise that many changes can be made to the embodiments described, while still attaining the beneficial results of the present invention. It will also be apparent that some of the desired benefits of the present invention can be attained by selecting some of the features of the present invention without utilising other features. In fact, the general operating principle allows for the design of an entire family of mechanisms with an arbitrary number of degrees of freedom. Accordingly, those skilled in the art will recognise that modifications and adaptations to the present invention are possible and can even be desirable in certain circumstances and are a part of the present invention. Thus, the following description is provided as illustrative of the principles of the present invention and not a limitation thereof.

In the drawings, reference numeral 10 refers generally to a drive arrangement in accordance with the invention.

The drive arrangement 10 includes a support structure in the form of a circular plate 12. It will be appreciated, however, that the support structure could take any desired form or could be omitted entirely, for example the power sources could be secured directly to the ground thereby obviating the need for a separate support structure. Three electric motors, stepper motors or servo motors 14, 16, 18 are connected to the plate 12 at circumferentially spaced-apart positions.

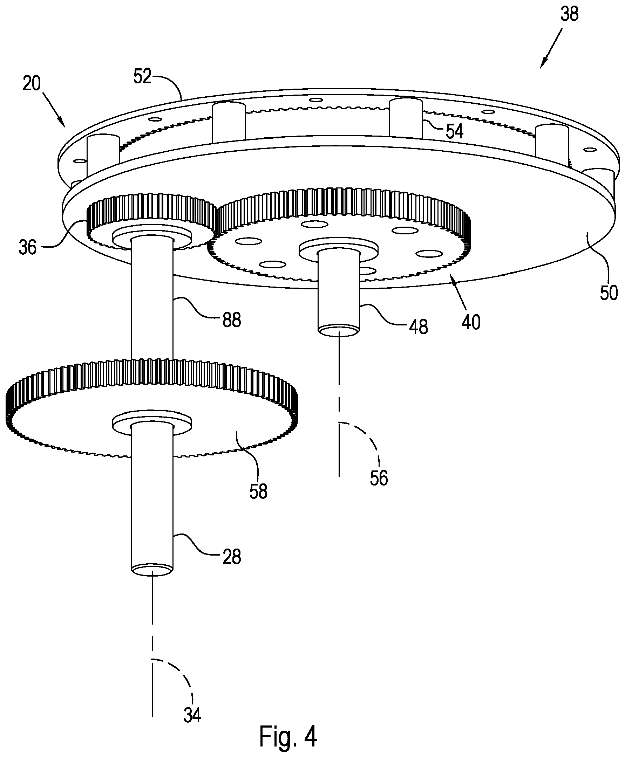

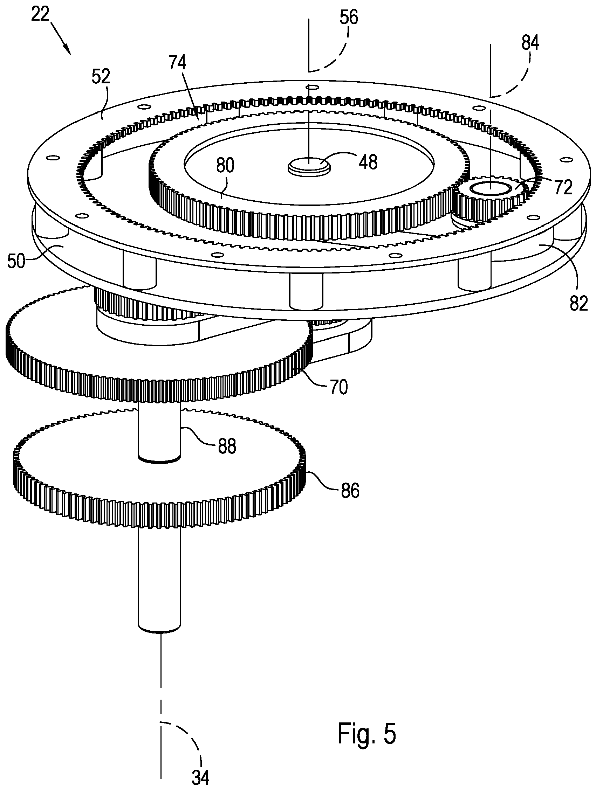

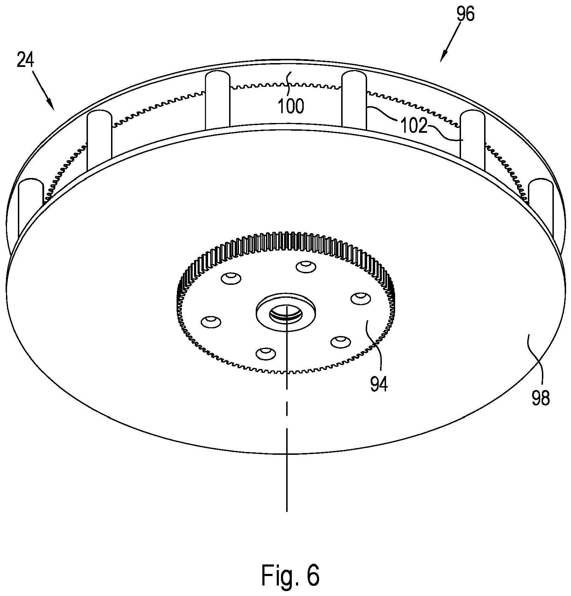

The drive arrangement 10 includes a first gear train (Figure 4), generally indicated by reference numeral 20, a second gear train (Figure 5), generally indicated by reference numeral 22 and a third gear train (Figure 6), generally indicated by reference numeral 24. The motors 14, 16, 18 are drivingly connected to the gear trains 20, 22, 24, respectively, as described in more detail herebelow.

The drive arrangement 10 includes a shaft 28 which is supported in a bearing arrangement, generally indicated by reference numeral 32 mounted to the plate 12 such that the shaft 28 extends upwardly from the plate 12 and is rotatable about a primary axis of rotation 34.

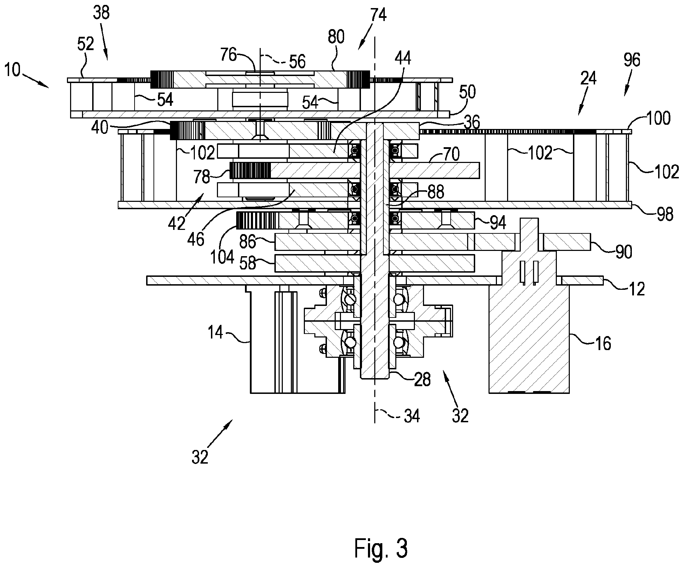

As can best be seen in Figures 3 and 4 of the drawings, the first gear train 20 includes a first input gear 36 which is secured to the shaft 28 at or towards a free or upper end thereof. The first gear train 20 further includes a first output gear, generally indicated by reference numeral 38 and a first intermediate gear, generally indicated by reference numeral 40 whereby the first input gear 36 is drivingly connected to the first output gear 38 as described in more detail herebelow.

A carrier arm, generally indicated by reference numeral 42 comprises upper and lower limbs 44, 46. An inner end of the carrier arm 42 is rotatably mounted on the shaft 28 for rotation about the primary axis of rotation 34. A shaft 48 is connected to the carrier arm 42 towards a radially outer end thereof.

The first output gear 38 is in the form of a ring gear and comprises a base plate 50 and an annular gear ring 52 which is connected to and axially spaced from the base plate 50 by circumferentially spaced studs 54. A plurality of circumferentially spaced gear teeth is provided on a radially inner edge of the gear ring 52.

The first intermediate gear 40 is secured to the first output gear 38 and both are rotatable about a second axis of rotation 56 which is defined by the shaft 48 and is parallel with and spaced laterally from the primary axis of rotation 34. A first connecting gear 58 is mounted on the shaft 28 and the motor 14 is drivingly connected to the first connecting gear 58 by means of a pinion 60 mounted on an output shaft of the motor 14.

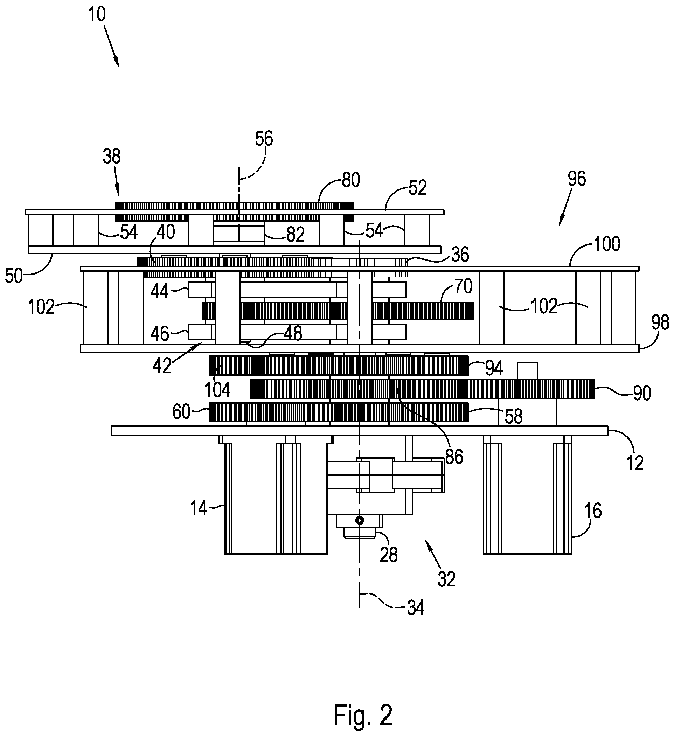

As can best be seen in Figures 2,3 and 5 of the drawings, the second gear train 22 includes a second input gear 70 which is mounted for rotation about the primary axis of rotation 34. The second gear train further includes a second output gear 72 and a second intermediate gear pair 74 whereby the second input gear 70 is drivingly connected to the second output gear 72.

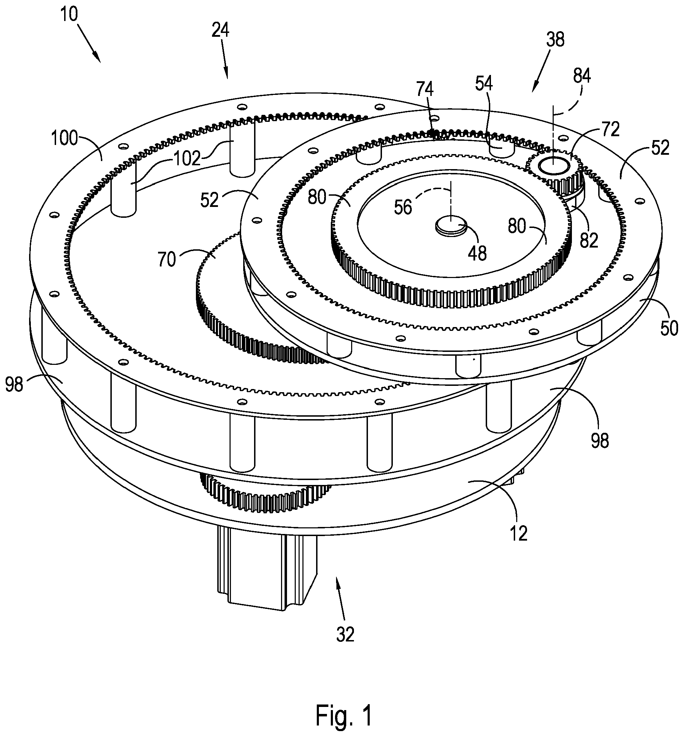

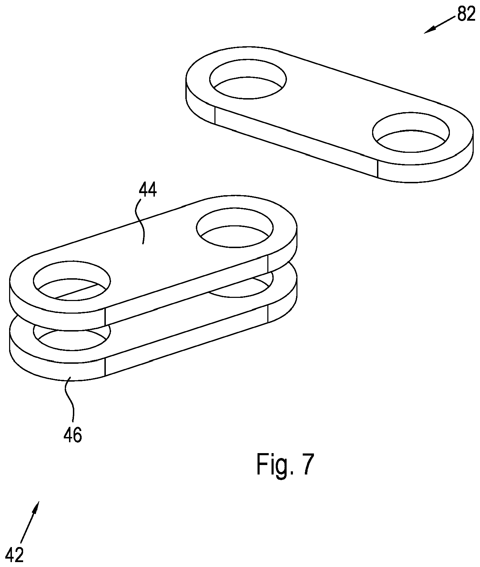

The second intermediate gear pair 74 includes a connecting shaft 76 which is supported on the carrier arm 42 for rotation about the second axis of rotation 56. A first intermediate gear 78 is connected to the connecting shaft 76 between the upper and lower limbs 44, 46. The second input gear 70 is drivingly connected to the first intermediate gear. A second intermediate gear 80 is mounted on the connecting shaft 76 at a position spaced from the first intermediate gear 78. The second intermediate gear 80 drivingly engages the second output gear 72. The second output gear 72 is mounted on a carrier arm 82 (Figures 1 and 7) adjacent one end thereof, the other end of the carrier arm 82 being rotatably mounted on the connecting shaft 76. The second output gear 72 is rotatable about a third axis of rotation 84 which is parallel with and laterally offset from the second axis of rotation 56. The teeth of the second output gear 72 mesh with both the teeth of the second intermediate gear 80 and the teeth of the first output gear 38.

A second connecting gear 86 and the second input gear 70 are mounted on a common tubular shaft 88 (Figure 3) which is mounted over the shaft 28 concentrically therewith for rotation about the primary axis of rotation 34. Drive from the motor 16 to the second connecting gear 86 is via a pinion 90 which is mounted on an output shaft of the motor 16.

As can best be seen in Figures 2, 3 and 6 of the drawings, the third gear train 24 includes a third input gear 94 and a third output gear 96 which are connected together and are rotatable about the primary axis of rotation 34.

The third output gear 96 is in the form of a ring gear and has a similar construction to the first output gear 38. More particularly, the third output gear 96 includes a base plate 98 and an annular gear ring 100 which is connected to the base plate by circumferentially spaced connecting studs 102. Circumferentially spaced gear teeth are provided around a radially inner edge of the gear ring 100. The gear teeth of the first intermediate gear 40 mesh with both the gear teeth of the first input gear 36 and the gear teeth of the third output gear 96. Drive to the third input gear 94 from a motor (not shown) is by means of a pinion 104 which is mounted on an output shaft of the motor.

It will be appreciated that the first input gear 36, third output gear 96 and the first intermediate gear 40 together form, respectively, the sun gear, ring gear and planet gear of a first planetary gear set. In addition, the second intermediate gear 80, the first output gear 38 and the second output gear 72 together form, respectively, the sun gear, ring gear and planet gear of a second planetary gear set. The second planetary gear set is connected in series with the first planetary gear set by virtue of the planet gear 40 of the first planetary gear set being drivingly connected to the ring gear 38 of the second planetary gear set.

By controlling the operation of the motors 14,16,18, with knowledge of the inverse kinematic relationship of the drive arrangement, the second output gear 72 can be rotated about the third axis of rotation 84 and simultaneously, displaced transversely in any direction within a circular zone, the radius of which is equal to the sum of the spacing between the first axis of rotation and the second axis of rotation and between the second axis of rotation and the third axis of rotation

The Inventor believes that in this way, the second output gear 72 or a device connected thereto can be rotated about the axis of rotation 84 at a desired speed and in addition it is simultaneously provided with two degrees of freedom in the plane in which it rotates by making use of purely rotational components which, the Inventor believes, will improve the mechanisms reliability.

In addition, the use of rotating components avoids sliding contact between adjacent parts.

It will be appreciated that the mechanism described above is a parallel kinematic mechanism. The current invention enjoys the benefits of a parallel kinematic mechanism, namely, high stiffness, no need to move the inertia of serially stacked actuators like in commonly used serial kinematic mechanisms and the superposition of the power input from multiple actuators. However, the invention avoids the disadvantages, typical of parallel kinematic mechanisms such as kinematic singularities and small workspace relative to the machine footprint.

## Claims

1. A drive arrangement (10) configured to drive a rotating component selectively rotationally about an axis of rotation (84) and/or laterally relative to the axis of rotation, which drive arrangement consists of a plurality of rotating components, the drive arrangement including a first gear train (20) which includes a first input gear (36), to which a first electric motor (14) is drivingly connected, the first input gear (36) being rotatable about a primary axis of rotation (34), a first output gear (38) which is a ring gear and a first intermediate gear (40) which is connected to the first output gear (38) and to which the first input gear (36) is drivingly connected, a second gear train (22) which includes a second input gear (70), to which a second electric motor (16) is drivingly connected, a second output gear (72) and a second intermediate gear pair (74) whereby the second input gear (70) is drivingly connected to the second output gear (72), the second output gear (72) being in engagement with the first output gear (38), and a third gear train (24) which includes a third input gear (94), to which a third electric motor (18) is drivingly connected, and a third output gear (96) to which the third input gear (94) is drivingly connected, the third output gear (96) being a ring gear which is rotatable about the primary axis of rotation (34) and with which the first intermediate gear (40) of the first gear train (20) is drivingly engaged,
**characterized in that**
the second input gear (70) being rotatable about the primary axis of rotation (34), the third input gear (94) being rotatable about the primary axis of rotation (34), and the second intermediate gear pair (74) including a connecting shaft (76) to which a first intermediate gear (78) and a second intermediate gear (80) are mounted, the first intermediate gear (78) being in driving engagement with the second input gear (70) and the second intermediate gear (80) being in driving engagement with the second output gear (72), the first intermediate gear (40) of the first gear train (20) and the connecting shaft (76) of the second gear train (22) being rotatable about a second axis of rotation (56) which is parallel with and laterally spaced from the primary axis of rotation (34), the second output gear (72) of the second gear train (22) forming or being connected to the rotating component.

2. A drive arrangement as claimed in claim 1, in which the lateral displacement is in a plane which is perpendicular to the axis of rotation (84).

3. A drive arrangement as claimed in claim 1 or claim 2, in which the first input gear (36), third output gear (96) and the first intermediate gear (40) together form, respectively, a sun gear, ring gear and planet gear of a first planetary gear set.

4. A drive arrangement as claimed in claim 3, in which the second intermediate gear (80), the first output gear (38) and the second output gear (72) together form, respectively, a sun gear, ring gear and planet gear of a second planetary gear set.

5. A drive arrangement as claimed in claim 4, in which the planet gear (40) of the first planetary gear set is drivingly connected to the ring gear (38) of the second planetary gear set.

6. A drive arrangement as claimed in any one of claims 1 to 5, in which the first input gear (36), second input gear (70) and third output gear (94) are mounted on first, second and third shafts (28, 88, 28), respectively, which are concentrically arranged for rotation about the primary axis of rotation, drive to the first second and third shafts being through first, second and third pinions, respectively, to which the first, second and third electric motors are drivingly connected.

7. A method of displacing a component, which is rotatable about an axis of rotation, selectively rotationally about the axis of rotation and/or laterally relative to the axis of rotation which includes transmitting drive to the component from a power source through rotating components both the rotational and lateral displacement of the component being by a drive arrangement as claimed in any one of claims 1 to 6.

## Patentansprüche

1. Eine Antriebsanordnung (10), die dazu ausgebildet ist, ein rotierendes Bauteil selektiv rotierend um eine Drehachse (84) und/oder seitlich relativ zu der Drehachse anzutreiben, wobei die Antriebsanordnung eine Vielzahl von rotierenden Bauteilen umfasst, wobei die Antriebsanordnung einen ersten Getriebezug (20) umfasst, der ein erstes Eingangszahnrad (36) umfasst, mit dem ein erster Elektromotor (14) antriebsmäßig verbunden ist, wobei das erste Eingangszahnrad (36) um eine primäre Drehachse (34) drehbar ist, ein erstes Ausgangszahnrad (38), das ein Hohlrad ist, und ein erstes Zwischenzahnrad (40), das mit dem ersten Ausgangszahnrad (38) verbunden ist und mit dem das erste Eingangszahnrad (36) antriebsmäßig verbunden ist, einen zweiten Getriebezug (22), der ein zweites Eingangszahnrad (70) umfasst, mit dem ein zweiter Elektromotor (16) antriebsmäßig verbunden ist, ein zweites Ausgangszahnrad (72) und ein zweites Zwischenzahnradpaar (74), wobei das zweite Eingangszahnrad (70) mit dem zweiten Ausgangszahnrad (72) antriebsmäßig verbunden ist, wobei das zweite Ausgangszahnrad (72) mit dem ersten Ausgangszahnrad (38) in Eingriff steht, und einen dritten Getriebezug (24), der ein drittes Eingangszahnrad (94) aufweist, welches mit einem dritten Elektromotor (18) antriebsmäßig verbunden ist, und ein drittes Ausgangszahnrad (96), mit dem das dritte Eingangszahnrad (94) antriebsmäßig verbunden ist, umfasst, wobei das dritte Ausgangszahnrad (96) ein um die primäre Drehachse (34) drehbares Hohlrad ist, mit dem das erste Zwischenzahnrad (40) des ersten Getriebezugs (20) antriebsmäßig in Eingriff steht,
**dadurch gekennzeichnet, dass**
das zweite Eingangszahnrad (70) um die primäre Drehachse (34) drehbar ist, das dritte Eingangszahnrad (94) um die primäre Drehachse (34) drehbar ist und das zweite Zwischenzahnradpaar (74) eine Verbindungswelle (76) umfasst, an der ein erstes Zwischenzahnrad (78) und ein zweites Zwischenzahnrad (80) angebracht sind, wobei das erste Zwischenzahnrad (78) in Antriebseingriff mit dem zweiten Eingangszahnrad (70) steht und das zweite Zwischenzahnrad (80) in Antriebseingriff mit dem zweiten Ausgangszahnrad (72) steht, wobei das erste Zwischenzahnrad (40) des ersten Getriebezuges (20) und die Verbindungswelle (76) des zweiten Getriebezuges (22) um eine zweite Drehachse (56) drehbar sind, die parallel und seitlich beabstandet zur primären Drehachse (34) liegt, wobei das zweite Ausgangszahnrad (72) des zweiten Getriebezuges (22) das rotierende Bauteil bildet oder mit diesem verbunden ist.

2. Die Antriebsanordnung nach Anspruch 1, bei der die seitliche Verschiebung in einer Ebene erfolgt, die senkrecht zur Drehachse (84) steht.

3. Die Antriebsanordnung nach Anspruch 1 oder Anspruch 2, bei der das erste Eingangszahnrad (36), das dritte Ausgangszahnrad (96) und das erste Zwischenzahnrad (40) zusammen ein Sonnenzahnrad, ein Hohlrad und ein Planetenzahnrad eines ersten Planetenzahnradsatzes bilden.

4. Die Antriebsanordnung nach Anspruch 3, bei der das zweite Zwischenzahnrad (80), das erste Ausgangszahnrad (38) und das zweite Ausgangszahnrad (72) zusammen ein Sonnenzahnrad, ein Hohlrad und ein Planetenzahnrad eines zweiten Planetenzahnradsatzes bilden.

5. Die Antriebsanordnung nach Anspruch 4, bei der das Planetenzahnrad (40) des ersten Planetenzahnradsatzes mit dem Hohlrad (38) des zweiten Planetenzahnradsatzes antriebsmäßig verbunden ist.

6. Die Antriebsanordnung nach einem der Ansprüche 1 bis 5, bei der das erste Eingangszahnrad (36), das zweite Eingangszahnrad (70) und das dritte Ausgangszahnrad (94) auf einer ersten, einer zweiten bzw. einer dritten Welle (28, 88, 28) montiert sind, die konzentrisch zur Drehung um die primäre Drehachse angeordnet sind, wobei der Antrieb auf die erste, die zweite und die dritte Welle über ein erstes, ein zweites bzw. ein drittes Ritzel erfolgt, mit denen der erste, der zweite und der dritte Elektromotor antriebsmäßig verbunden sind.

7. Ein Verfahren zum Verschieben eines Bauteils, das um eine Drehachse drehbar ist, selektiv rotierend um die Drehachse und/oder seitlich relativ zur Drehachse, umfassend die Übertragung eines Antriebs auf das Bauteil von einer Energiequelle durch rotierende Bauteile, wobei sowohl die drehende als auch die seitliche Verschiebung des Bauteils durch eine Antriebsanordnung nach einem der Ansprüche 1 bis 6 erfolgt.

## Revendications

1. Agencement d'entraînement (10) configuré pour entraîner un composant rotatif sélectivement en rotation autour d'un axe de rotation (84) et/ou latéralement par rapport à l'axe de rotation, lequel agencement d'entraînement se compose d'une pluralité de composants rotatifs, l'agencement d'entraînement comprenant un premier train d'engrenages (20) qui comprend un premier engrenage d'entrée (36) auquel un premier moteur électrique (14) est raccordé, par entraînement, le premier engrenage d'entrée (36) pouvant tourner autour d'un axe de rotation principal (34), un premier engrenage de sortie (38) qui est une couronne et un premier engrenage intermédiaire (40) qui est raccordé au premier engrenage de sortie (38) et auquel le premier engrenage d'entrée (36) est raccordé, par entraînement, un deuxième train d'engrenages (22) qui comprend un deuxième engrenage d'entrée (70) auquel un deuxième moteur électrique (16) est raccordé, par entraînement, un deuxième engrenage de sortie (72) et une paire de seconds engrenages intermédiaires (74), moyennant quoi le deuxième engrenage d'entrée (70) est raccordé, par entraînement, au deuxième engrenage de sortie (72), le deuxième engrenage de sortie (72) étant en mise en prise avec le premier engrenage de sortie (38), et un troisième train d'engrenages (24) qui comprend un troisième engrenage d'entrée (94) auquel un troisième moteur électrique (18) est raccordé, par entraînement, et un troisième engrenage de sortie (96) auquel le troisième engrenage d'entrée (94) est raccordé, par entraînement, le troisième engrenage de sortie (96) étant une couronne qui peut tourner autour de l'axe de rotation principal (34) et avec lequel le premier engrenage intermédiaire (40) du premier train d'engrenages (20) est mis en prise par entraînement,
**caractérisé en ce que** :
le deuxième engrenage d'entrée (70) pouvant tourner autour de l'axe de rotation principal (34), le troisième engrenage d'entrée (94) pouvant tourner autour de l'axe de rotation principal (34), et la paire de seconds engrenages intermédiaires (74) comprenant un arbre de raccordement (76) sur lequel un premier engrenage intermédiaire (78) et un second engrenage intermédiaire (80) sont montés, le premier engrenage intermédiaire (78) étant en mise en prise par entraînement avec le deuxième engrenage d'entrée (70) et le second engrenage intermédiaire (80) étant en mise en prise par entraînement avec le deuxième engrenage de sortie (72), le premier engrenage intermédiaire (40) du premier train d'engrenages (20) et l'arbre de raccordement (76) du deuxième train d'engrenages (22) pouvant tourner autour d'un second axe de rotation (56) qui est parallèle à et latéralement espacé de l'axe de rotation principal (34), le deuxième engrenage de sortie (72) du deuxième train d'engrenages (22) formant le composant rotatif ou étant raccordé à ce dernier.

2. Agencement d'entraînement selon la revendication 1, dans lequel le déplacement latéral est dans un plan qui est perpendiculaire à l'axe de rotation (84).

3. Agencement d'entraînement selon la revendication 1 ou la revendication 2, dans lequel le premier engrenage d'entrée (36), le troisième engrenage de sortie (96) et le premier engrenage intermédiaire (40) forment ensemble, respectivement, un planétaire, une couronne et un satellite d'un premier train planétaire.

4. Agencement d'entraînement selon la revendication 3, dans lequel le second engrenage intermédiaire (80), le premier engrenage de sortie (38) et le deuxième engrenage de sortie (72) forment ensemble, respectivement, un planétaire, une couronne et un satellite d'un second train planétaire.

5. Agencement d'entraînement selon la revendication 4, dans lequel le satellite (40) du premier train planétaire est raccordé, par entraînement, à la couronne (38) du second train planétaire.

6. Agencement d'entraînement selon l'une quelconque des revendications 1 à 5, dans lequel le premier engrenage d'entrée (36), le deuxième engrenage d'entrée (70) et le troisième engrenage de sortie (94) sont montés sur des premier, deuxième et troisième arbres (28, 88, 28) respectivement, qui sont arrangés, de manière concentrique, pour tourner autour de l'axe de rotation principal, l'entraînement par rapport aux premier, deuxième et troisième arbres ayant lieu par le biais de premier, deuxième et troisième pignons, respectivement, auxquels les premier, deuxième et troisième moteurs électriques sont raccordés, par entraînement.

7. Procédé pour déplacer un composant, qui peut tourner autour d'un axe de rotation, sélectivement en rotation autour de l'axe de rotation et/ou latéralement par rapport à l'axe de rotation qui comprend l'étape consistant à transmettre l'entraînement au composant depuis une source d'alimentation par le biais de composants rotatifs, à la fois le déplacement rotatif et latéral du composant ayant lieu par un agencement d'entraînement selon l'une quelconque des revendications 1 à 6.
